# EUROPÄISCHE PATENTSCHRIFT

(11) **EP 3 529 634 B1**
(45) Veröffentlichungstag und Bekanntmachung des Hinweises auf die Patenterteilung: **11.12.2024**
(21) Anmeldenummer: 17797239.5
(22) Anmeldetag: 02.10.2017
(51) Int. Cl.: G01S 17/42, G01S 17/93, G01S 7/481, G01S 7/497

(54) **3D-LIDAR-SENSOR**
3D LIDAR SENSOR
CAPTEUR LIDAR 3D

(30) Priorität: 19.10.2016 DE 102016220504
(43) Veröffentlichungstag der Anmeldung: 28.08.2019
(73) Patentinhaber: Robert Bosch GmbH, 70442 Stuttgart (DE)
(72) Erfinder: STOPPEL, Klaus, 74395 Mundelsheim (DE); BUETTNER, Axel, 70197 Stuttgart (DE); BOGATSCHER, Siegwart, 74372 Sersheim (DE); SCHWARZ, Hans-Jochen, 70567 Stuttgart (DE); SPARBERT, Jan, 71277 Rutesheim (DE); FREDERIKSEN, Annette, 71272 Renningen (DE); OSTRINSKY, Joern, 71254 Ditzingen (DE); KAMIL, Mustafa, 71229 Leonberg (DE)
(86) Internationale Anmeldenummer: PCT/EP2017/074980
(87) Internationale Veröffentlichungsnummer: WO 2018/072986

(56) Entgegenhaltungen:
- EP-A2- 1 659 421
- DE-A1- 102015 200 224
- DE-A1- 4 340 756
- US-A1- 2004 257 556

## Beschreibung

Die Erfindung betrifft einen 3D-LIDAR-Sensor, insbesondere für Kraftfahrzeuge, mit einer Laserstrahlquelle, einem optischen Empfänger und einem Abtastsystem zum Ablenken eines von der Laserstrahlquelle erzeugten Laserstrahls in zwei zueinander senkrechten Abtastrichtungen.

### Stand der Technik

Aus der auf die Anmelderin zurückgehenden DE 10 2015 200 224 A1 ist ein solcher 3D-LIDAR-Sensor bekannt. Es werden beispielsweise Laserstrahlen mit einer Wellenlänge zwischen 850 und 1500nm geeigneter Intensität verwendet, um eine Gefährdung von Personen durch die Laserstrahlen zu vermeiden. Zum Ablenken des Laserstrahls dient beispielsweise ein Mikrospiegelaktor beziehungsweise ein MEMS (Micro-Electro-Mechanical-System) um den Laserstrahl in die gewünschte Richtung zu lenken. Wird auch eine Laufzeitmessung des ausgesendeten, an einem Objekt reflektierten und vom optischen Empfänger wiederum empfangenen Laserstrahl vorgenommen so kann ein dreidimensionales Bild der Umgebung erfasst und mit entsprechenden Auswertevorrichtungen und/oder Fahrassistenzsystemen interpretiert werden. Somit kann unter anderem ein Fahrer des Kraftfahrzeugs auf feststehende oder bewegliche Hindernisse im Fahrweg aufmerksam gemacht werden, um eine Kollision zu vermeiden. Üblicherweise ist ein solcher 3D-LIDAR-Sensor in einem Gehäuse angeordnet, das mit einer Austrittsöffnung in Form einer Scheibe oder Linse für den Laserstrahl ausgestattet ist.

Aus der Druckschrift US 2004 / 0 257 556 A1 ist ein LIDAR-Sensor bekannt, bei dem eine zusätzliche Abtasteinrichtung dazu dient, Abweichungen vom Normalbetrieb zu detektieren. Die zusätzliche Abtasteinrichtung ist dabei eingerichtet, Daten eines Sensors dahingehend auszuwerten, ob diese innerhalb oder außerhalb eines vordefinierten Fehlerbereichs liegen.

Aus der Druckschrift DE 43 40 756 A1 ist ein LIDAR-Sensor bekannt, bei dem eine zusätzliche Leuchtdiode und eine zusätzliche Empfangsdiode für das Licht der Leuchtdiode genutzt werden können, um Verschmutzungen des Sensors zu detektieren.

### Offenbarung der Erfindung

Aufgabe der Erfindung ist es, einen 3D-LIDAR-Sensor mit verbesserter Funktionalität und Zuverlässigkeit zu schaffen, der insbesondere für Kraftfahrzeuge geeignet ist, wie in Anspruch 1 dargestellt ist.

Ebenso soll ein entsprechendes Verfahren zum Betrieb des 3D-LIDAR-Sensors angegeben werden, wie in Anspruch 6 dargestellt ist.

Diese Aufgabe wird erfindungsgemäß dadurch gelöst, dass in oder an dem 3D-LIDAR-Sensor eine weitere Detektionseinrichtung für Abweichungen vom Normalbetrieb vorgesehen ist. Dabei kann die Detektionseinrichtung in an sich beliebiger Weise ausgestaltet sein, bevorzugt jedoch wie im Folgenden beschrieben. Man kann diese Detektionseinrichtung auch als "intelligente Ebene" bezeichnen, die im oder am Sensor angeordnet ist, also beispielsweise im Sende- und/oder Empfangspfad des Laserstrahls des Sensors. Diese Ebene kann beispielsweise im Inneren eines Gehäuses des Sensors oder an der Austrittsöffnung angeordnet sein.

Es ist eine Erkennung der Aussenderichtung des Laserstrahls an Referenzpunkten vorgesehen. An einer Zwischenebene und/oder an der Austrittsöffnung sind zusätzliche Lichtsensoren angeordnet, die be normalem Betrieb des Lasers sowie des Abtastsystems nicht angestrahlt werden müssten. Erfolgt dies aber kann selbsttätig erkannt werden, dass der Laser beziehungsweise das Abtastsystem dejustiert sind und es kann eine entsprechende Fehlermeldung ausgegeben werden beziehungsweise eine Selbstkalibrierung des gesamten Systems wird durchgeführt. In gleicher Weise kann vorgesehen sein, dass die Lichtsensoren im normalen Betrieb angestrahlt werden müssten. Erfolgt dies nicht kann selbsttätig auf eine Dejustage geschlossen werden. Dies kann in Form von Laserlichtdetektoren ausgeführt sein, die am Rand der Austrittsöffnung angeordnet sind oder im Bereich einer sogenannten Zwischenebene. Somit kann erfasst werden, ob der ausgesendete Laserstrahl auch tatsächlich in die gewünschte Richtung gesendet wird. Diese Richtung kann unter anderem durch mechanische/thermische Einflüsse verändert werden, z. B. durch Wärmeausdehnung des Gehäuses des 3D-LIDAR-Sensors oder des Abstands der Mikrospiegel zu einem Mikrolinsenarray. Auch kann eine mechanische Dejustage des gesamten Sensors z. B. durch eine Kollision des Kraftfahrzeugs vorliegen. Auch kann der Laser selbst im Dauerbetrieb ein thermisches Driften aufweisen, z.B. eine Laserverzögerung nach einem Triggerimpuls.

Vorteilhafte Weiterbildungen und Ausgestaltungen der Erfindung sind in den Unteransprüchen angegeben.

Weiterhin kann eine Einstrahlung von Fremdlicht beziehungsweise das Licht anderer LIDAR-Sensoren von Kraftfahrzeugen erkannt und unterdrückt werden beispielsweise anhand anderer Frequenzen, Impusldauern oder dergleichen. Hierzu dienen Bandpassfilter und/oder entsprechende Beschichtungen beispielsweise an der Austrittsöffnung, die nur für Licht einer bestimmten Wellenlänge durchlässig sind. Prinzipiell wäre hier aber auch eine Datenübertragung zwischen den Sensoren verschiedener Kraftfahrzeuge möglich, um beispielsweise den Verkehrsfluss zu verbessern.

Wird bei dem rückgestreuten und vom optischen Empfänger beziehungsweise einem zusätzlichen Streulichtsensor empfangenen Laserlicht eine ungewöhnliche Abweichung festgestellt, beispielsweise eine Rückreflexion durch Nebel, Gischt oder eine Retroreflexion durch Sonnenstrahlung so kann durch eine weitere Detektionseinrichtung dies erkannt und bei der Auswertung berücksichtigt werden.

Ebenso kann eine Umgebungslichterfassung z. B. in Form eines Helligkeitssensors vorgesehen sein, um unter anderem bei Einfahrt in einen Tunnel oder eine Tiefgarage die geänderten Lichtverhältnisse zu berücksichtigen.

Es wird vorgeschlagen, dass entweder an der Austrittsöffnung oder an einer Zwischenebene ein engmaschiges Gitter aus photoempfindlichen Widerstands-Fäden angeordnet ist, um zu überprüfen, ob der Laserstrahl im Dauerbetrieb auch tatsächlich alle gewünschten Beobachtungsbereiche überstreicht. Somit kann erkannt werden, ob es keine Lücken im Erfassungsbereich gibt.

Prinzipiell ist es möglich, beispielsweise an der Scheibe oder Linse der Austrittsöffnung oder an einer Scheibe in einer Zwischenebene mittels eines piezoelektrischen Effekts eine Dickenänderung herbeizuführen, um derart das Transmissionsverhalten zu verändern. Dies kann auch ein Fabry-Perot-Filtereffekt sein. Somit kann bevorzugt nur die gewünschte Wellenlänge auch bei einer Drift der Laserwellenlänge empfangen werden und andere Wellenlängen werden unterdrückt. Dies kann auch sehr schmalbandig erfolgen. Ebenso ist es möglich durch einen umgekehrten Piezoeffekt an der Austrittsöffnung auch in der Abhängigkeit von der Fahrtgeschwindigkeit des Kraftfahrzeugs Einflüsse durch Windböen, andere Schallsignale oder dergleichen auf die Aussende- oder Empfangsrichtungen der Laserstrahlen zu detektieren und auszugleichen.

Weiterhin kann in oder an oder zusätzlich zum 3D-LIDAR-Sensor ein Ultraschallsensor vorgesehen sein, um eine weitere Überwachung der Fahrzeugumgebung zu ermöglichen.

Ebenso kann ein Temperatursensor vorgesehen sein, der beispielsweise die Umgebungs- und/oder die Straßenbelagstemperatur erfasst, um dies bei der Signalauswertung zu berücksichtigen.

In gleicher Weise könnte auch ein Detektor für radioaktive Strahlung vorgesehen sein, die die Messergebnisse beeinflussen könnte.

Vorzugsweise ist die Scheibe oder Linse an der Austrittsöffnung schmutzabweisend ausgebildet, beispielsweise mit einer Lotus-Effekt-Beschichtung.

Auch kann der 3D-LIDAR-Sensor mit einem Beschlagsensor kombiniert werden, um beispielsweise den Beschlag durch Regenwasser, Dunst oder Nebel zu erfassen und bei der Auswertung der Messergebnisse zu berücksichtigen.

Ebenso ist es vorgeschlagen, dass die Scheibe oder Linse an der Austrittsöffnung besonders schlag- und kratzbeständig ausgeführt ist, um beispielsweise Steinschlag zu widerstehen. Dies kann unter anderem durch eine Diamantbeschichtung erfolgen.

Schließlich kann eine Schadenserkennung beispielsweise mittels integrierter Wiederstands- oder Dehnmessstreifen erfolgen, um eine Beschädigung an der Scheibe oder Linse der Austrittsöffnung zu erkennen.

Im Inneren des 3D-LIDAR-Sensors kann auch eine aufweitende und/oder fokussierende Optik z. B. in Form eines Mikrolinsenarrays für die ausgesendeten und/oder zurückgestreuten Laserstrahlen angeordnet sein, um den Bildwinkel zu vergrößern.

Es kann auch ein chemischer Detektor vorgesehen sein, der Beispielsweise den Einsatz von Streusalz, Smog oder andere Umwelteinflüsse erkennt, um diese bei der Auswertung der Messergebnisse zu berücksichtigen.

Im Folgenden werden Ausführungsbeispiele der Erfindung anhand der Zeichnung näher erläutert.

Es zeigen:
- Fig. 1: den schematischen Aufbau eines 3D-LIDAR-Sensors,
- Fig. 2: den 3D-LIDAR-Sensor mit zusätzlichen Sensoren,
- Fig. 3: eine Scheibe oder Linse im Querschnitt,
- Fig. 4: den Scanpfad eines Laserstrahls,
- Fig. 5: eine Scheibe oder Linse mit photoempfindlichen Widerstandsdrähten,
- Fig. 6: eine Scheibe oder Linse im Querschnitt,
- Fig. 7: eine Zwischenebene und
- Fig. 8: eine aufweitende Optik.

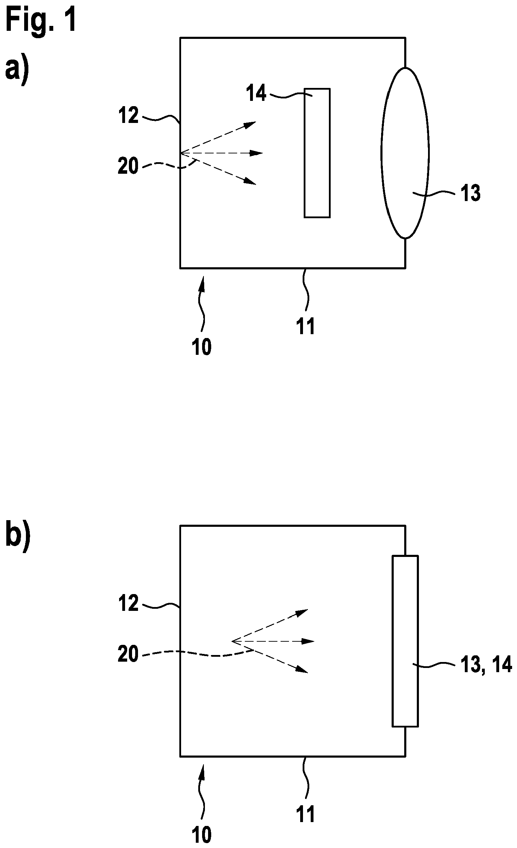

Der in Fig. 1 auf der linken Seite gezeigte 3D-LIDAR-Sensor 10 weist eine Laserstrahlquelle 11 auf, die wie durch die verschiedenen Pfeile angedeutet ist, dazu ausgelegt ist, Laserstrahlen 20 in zumindest zwei zueinander senkrecht stehenden Raumrichtungen abzustrahlen. Zusammen mit einem zur Vereinfachung der Darstellung hier nicht abgebildeten optischen Empfänger kann so insbesondere die Umgebung eines Kraftfahrzeugs überwacht werden. Der 3D-LIDAR-Sensor umfasst ein Gehäuse 12 und ist beispielsweise an oder in einer Karosserie eines Kraftfahrzeugs angeordnet. Es versteht sich, dass er mit einer elektrischen Stromversorgung ausgestattet ist sowie mit Datenübertragungsmitteln, um Messsignale an eine Steuerungseinrichtung des Kraftfahrzeugs zur weiteren Verarbeitung weiter zu leiten. Weiterhin ist an dem Gehäuse eine Scheibe oder Linse 13 angeordnet, um die Laserstrahlen 20 austreten und gegebenenfalls wieder eintreten zu lassen. Erfindungsgemäß ist eine weitere Detektionseinrichtung 14, hier zwischen Laserstrahlquelle 11 und Scheibe oder Linse 13 angeordnet, vorgesehen, um die Funktionalität des 3D-LIDAR-Sensors 10 zu erhöhen. Wie in Fig. 1 auf der rechten Seite dargestellt kann diese Detektionseinrichtung 14 auch in die Scheibe oder Linse 13 integriert sein.

Es kann auch ein Temperatursensor 28 vorgesehen sein, der die Umgebungstemperatur erfasst beziehungsweise der dazu ausgelegt ist einen Luftspiegelungseffekt zu erfassen, da insbesondere Luftspiegelungen auf heißem Straßenbelag die Messergebnisse beziehungsweise deren Auswertung beeinflussen könnten.

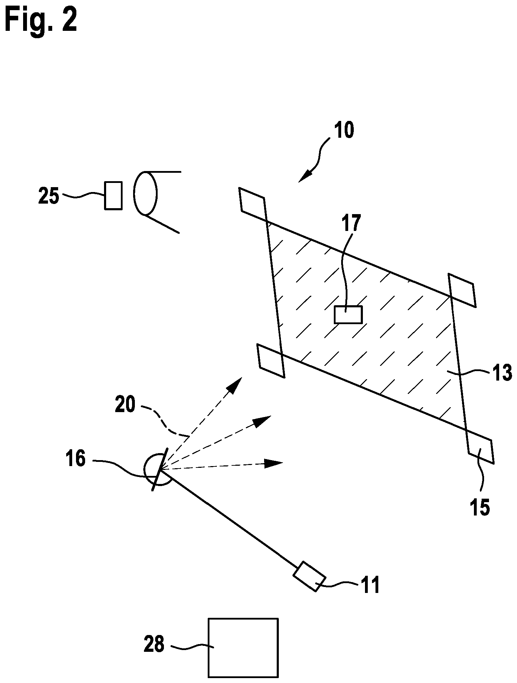

In Fig.2 ist eine Laserstrahlquelle 11 mit einem Spiegel 16 abgebildet, der wie durch den Doppelpfeil angedeutet in zwei senkrecht zueinander stehenden Raumrichtungen verschwenkbar ist, um eine Umgebung des Kraftfahrzeugs auszuleuchten. Die Laserstrahlen 20 treten durch eine Scheibe oder Linse 13 aus dem 3D-LIDAR-Sensor 10 aus. Hier sind an den Ecken der Scheibe oder Linse 13 zusätzliche Lichtsensoren 15 angeordnet. Tritt durch thermische und/oder mechanische und/oder durch zeitliche Veränderungen eine Dejustage der Richtung der Laserstrahlen 20 auf so wird das Laserlicht nicht mehr unmittelbar durch die Scheibe oder Linse 13 gerichtet sondern trifft auf einen umgebenden Rand des Gehäuses 12. Dies wird durch die Lichtsensoren 15 festgestellt und es kann eine Selbstjustage vorgenommen beziehungsweise eine Fehlermeldung ausgegeben werden.

Es versteht sich, dass die Lichtsensoren 15 nicht nur an den Ecken sondern auch um den gesamten Rand der Scheibe oder Linse 13 herum angeordnet sein können.

Weiterhin ist ein Streulichtsensor 25 dargestellt. Dieser kann beispielsweise erfassen, dass ein Laserstrahl 20 von einer Verschmutzung 17 auf der Scheibe oder Linse 13 unmittelbar reflektiert wird. Der Laserstrahl 20 dient dann nicht mehr zur Erfassung der Umgebung und es kann eine Fehlermeldung ausgegeben werden.

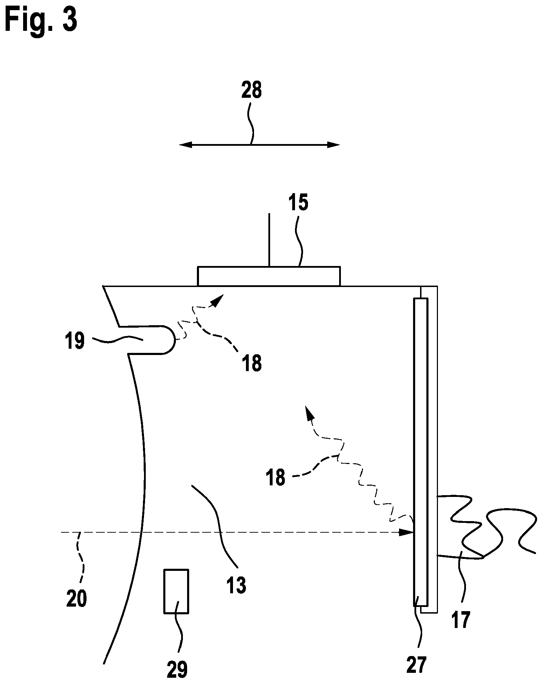

In Figur 3 ist im Querschnitt eine Scheibe oder Linse 13 eines 3D-LIDAR-Sensors dargestellt. Dabei sind alternativ oder zusätzlich Lichtsensoren 15 nicht nur um die Scheibe oder Linse 13 herum verteilt angeordnet sondern auch am Rand der Scheibe oder Linse 13. Trifft ein Laserstrahl 20 beispielsweise auf eine Verschmutzung 17 kann er innerhalb der Scheibe oder Linse 13 als Streulicht 18 reflektiert werden. Gleiches gilt für eine Beschädigung 19 der Scheibe oder Linse 13. Dies kann durch die Lichtsensoren 15 am Rand der Scheibe oder Linse 13 festgestellt werden. Eine Verschmutzung 17 kann auch durch Wassertropfen, Tau, Beschlag oder dergleichen gebildet und detektiert werden. Ebenso können Temperatureinflüsse, chemische oder radioaktive Einflüsse aus der Umgebung erfasst und bei der Auswertung berücksichtigt werden. Hierzu kann der 3D-LIDAR-Sensor 10 mit entsprechenden Sensoren ausgestattet beziehungsweise vernetzt sein.

Als Verschmutzung 17 kann ebenso auch ein Regen- oder Wassertropfen beziehungsweise der Beschlag durch Nebel oder Tau angesehen werden, der das Transmissionsverhalten ein- und austretender Laserstrahlen beeinflusst.

Zusätzlich kann auch ein Photowiderstand 27 vorgesehen sein, um das Umgebungslicht zu erfassen, so dass der 3D-LIDAR-Sensor 10 selbsttätig feststellen kann, dass in einen Tunnel, ein Parkhaus oder dergleichen eigefahren wird, um die geänderten Lichtverhältnisse zu berücksichtigen.

Zusätzlich oder alternativ zu dem Photowiderstand 17 kann auch eine kratzfeste und/oder Lotusbeschichtung vorgesehen sein.

Weiterhin kann zusätzlich oder alternativ mit einer chemisch sensitiven Beschichtung ein Umwelteinfluss wie beispielsweise eine Streusalzverschmutzung festgestellt werden.

Ebenso kann die Dicke der Scheibe oder Linse 13, wie durch den Doppelpfeil 28 angedeutet beispielswiese mittels eines Piezoeffekts angepasst werden, um ein gewünschtes Transmissionsverhalten für Laserstrahlen 20, beispielsweise in Abhängigkeit von Temperatur und/oder Luftdruck, zu erhalten. Ebenso kann durch eine piezoelektrische Erfassung der Einfluss von Schallwellen, des Fahrtwinds und dergleichen auf die Linse oder scheibe 13 erfasst und bei der Auswertung berücksichtigt werden.

Zusätzlich können in der Scheibe oder Linse 13 auch beispielsweise szintillierende Atome oder Moleküle eingebracht sein, wie durch das Kästchen 28 angedeutet. Diese würden durch radioaktive Strahlung angeregt und sendeten Licht aus, das mit entsprechenden Detektoren beispielsweise am Rand der Scheibe oder Linse 13 erfasst werden würde. Somit kann der Einfluss radioaktiver Strahlung festgestellt und bei der Auswertung berücksichtigt werden.

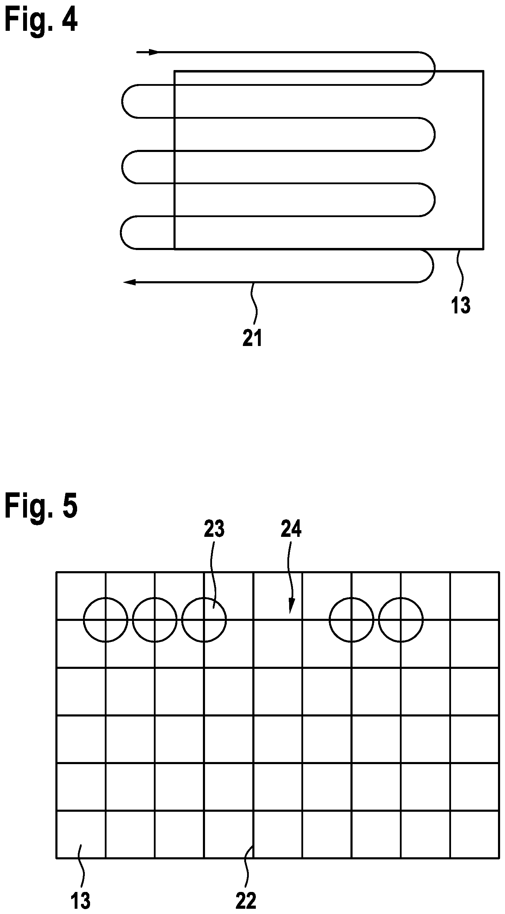

In Fig. 4 ist dargestellt, wie ein Scanpfad 21 eines Laserstrahls 20 über die Scheibe oder Linse 13 durch beliebige Einflüsse verschoben sein kann. Dies wird dann durch beispielsweise die Lichtsensoren 15 festgestellt und dann entsprechend wieder justiert.

Es versteht sich, dass die Scheibe oder Linse 13 beispielsweise mit einer Lotusbeschichtung, einer Kratzunempfindlichkeitsbeschichtung und/oder einer Beschichtung zum Durchlass nur bestimmter Wellenlängen ausgestattet sein kann. Gleiches gilt für eine Komponente, die im Inneren des 3D-LIDAR-Sensors 10 angeordnet ist. Ebenso kann ein Bandpassfilter und/oder ein Photowiderstand beispielsweise als zusätzliche Beschichtung vorgesehen sein. Somit kann beispielsweise das Eintreten von Laserstrahlen anderer Kraftfahrzeuge unterbunden werden, um Interferenzen oder sonstige Störungen zu vermeiden.

In Fig. 5 ist eine Scheibe oder Linse 13 abgebildet, auf oder in der photoempfindliche Widerstandsdrähte 22 beispielsweise netzartig angeordnet sind. Trifft ein Laserstrahl 20 auf einen solchen Draht 22 so wird ein elektrischer Impuls ausgelöst, veranschaulicht durch den Kreis 23. Ist beispielsweise im Spiegel 16 ein mechanischer Fehler aufgetreten und ein Bereich 24 wird nicht vom Laserstrahl überstrichen bleibt das elektrische Signal aus und es kann eine Fehlermeldung ausgegeben werden.

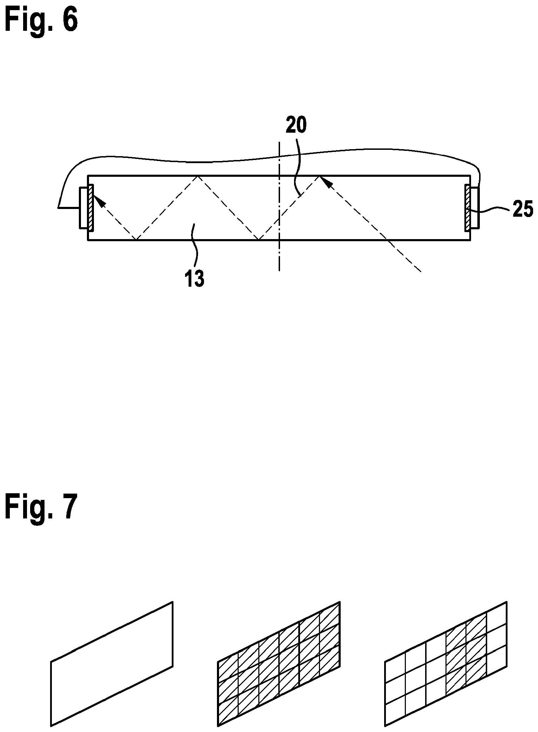

In Fig. 6 ist eine Scheibe oder Linse 13 im Querschnitt dargestellt. An ihrem Rand ist vorzugsweise umlaufend ein Bandpassfilter angeordnet, um Lichtstrahlen 26 einer unerwünschten Wellenlänge, also beispielsweise von Sensoren anderer Kraftfahrzeuge auszufiltern, so dass keine Verfälschung der Messergebnisse auftritt. Es sollen nur die Laserstrahlen 20 des eigenen 3D-LIDAR-Sensors 10 erfasst werden.

In Fig.7 sind drei verschiedene Ausgestaltungen der sogenannten intelligenten Zwischenebene dargestellt. Links ist diese transparent und lässt insbesondere die reflektierten Laserstrahlen sozusagen ungefiltert hindurchtreten. In der Mitte ist sie vollständig abgedunkelt und lässt beispielsweise nur Licht einer bestimmten Wellenlänge hindurchtreten und recht ist lediglich ein Teil abgedunkelt, um beispielsweise unerwünschte Lichteinstrahlungen gezielt auszublenden. Dies kann mit Micro-Arrays und/oder photosensitiven, ansteuerbaren Beschichtungen erfolgen.

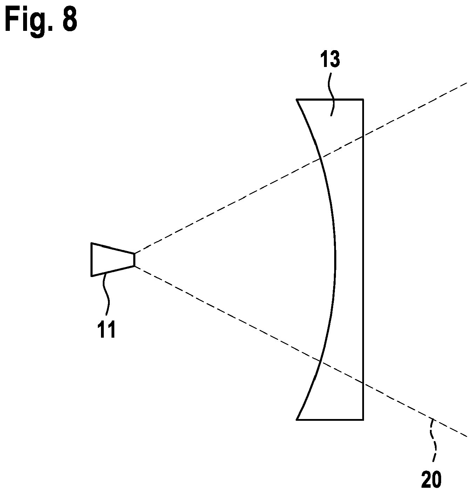

Schließlich ist in Fig. 8 eine Scheibe oder Linse 13 mit aufweitender Eigenschaft abgebildet. Die von einer Laserstrahlquelle 11 erzeugten Laserstrahlen werden durch die Scheibe oder Linse 13 aufgeweitet, um einen größeren Umgebungsbereich erfassen zu können. Prinzipiell ist auch eine fokussierende Ausgestaltung möglich.

## Patentansprüche

1. 3D-LIDAR-Sensor (10), insbesondere für Kraftfahrzeuge, mit einer Laserstrahlquelle (11), einem optischen Empfänger und einem Abtastsystem zum Ablenken eines von der Laserstrahlquelle (11) erzeugten Laserstrahls (20) in zwei zueinander senkrechten Abtastrichtungen, wobei in dem 3D-LIDAR-Sensor (10) eine weitere Detektionseinrichtung (14) für Abweichungen vom Normalbetrieb vorgesehen ist, wobei die Detektionseinrichtung im Inneren eines Gehäuses des 3D-LIDAR-Sensors oder an einer Austrittsöffnung angeordnet ist, wobei die Detektionseinrichtung (14) Lichtsensoren (15) umfasst,
wobei entweder die Lichtsensoren (15) an einer Zwischenebene und/oder an der Austrittsöffnung derart angeordnet sind, dass die Lichtsensoren beim normalen Betrieb der Laserstrahlquelle (11) und des Abtastsystems nicht angestrahlt werden und dadurch erfasst werden kann, ob der ausgesendete Laserstrahl tatsächlich in die gewünschte Richtung gesendet wird, wobei bei einem Anstrahlen der Lichtsensoren (15) erkannt werden kann, dass der Laserstrahl (20) beziehungsweise das Abtastsystem dejustiert sind,
oder wobei die Lichtsensoren (15) am Rand der Austrittsöffnung oder im Bereich der Zwischenebene derart angeordnet sind, dass die Lichtsensoren beim normalen Betrieb der Laserstrahlquelle (11) und des Abtastsystems angestrahlt werden und dadurch erfasst werden kann, ob der ausgesendete Laserstrahl tatsächlich in die gewünschte Richtung gesendet wird, wobei bei einem Nichtanstrahlen der Lichtsensoren (15) erkannt werden kann, dass der Laserstrahl (20) beziehungsweise das Abtastsystem dejustiert sind, und wobei bei einer Erkennung, dass der Laserstrahl (20) beziehungsweise das Abtastsystem dejustiert sind, eine Fehlermeldung ausgegeben wird.

2. 3D-LIDAR-Sensor (10) nach Anspruch 1, zusätzlich aufweisend einen Bandpassfilter und/oder einer Beschichtung, **dadurch gekennzeichnet, dass** Fremdlicht mittles des Bandpassfilters und/oder der Beschichtung unterdrückt werden kann.

3. 3D-LIDAR-Sensor (10) nach einem der vorhergehenden Ansprüche, **dadurch gekennzeichnet, dass** ein Streulichtsensor (16) vorgesehen ist.

4. 3D-LIDAR-Sensor (10) nach einem der vorhergehenden Ansprüche, **dadurch gekennzeichnet, dass** der 3D-Lidar-Sensor (10) mit weiteren Sensoren gekoppelt ist wie Regensensoren, Temperatursensoren, Ultraschallsensoren, chemischen Sensoren oder Radioaktivitätssensoren.

5. 3D-LIDAR-Sensor (10) nach einem der vorhergehenden Ansprüche, **dadurch gekennzeichnet, dass** eine aufweitende und/oder fokussierende Optik für die Laserstrahlen (20) vorgesehen ist.

6. Verfahren zum Betreiben eines 3D-LIDAR-Sensors (10), insbesondere für Kraftfahrzeuge, wobei der 3D-LIDAR-Sensor (10) mit einer Laserstrahlquelle (11), einem optischen Empfänger und einem Abtastsystem zum Ablenken eines von der Laserstrahlquelle (11) erzeugten Laserstrahls (20) in zwei zueinander senkrechten Abtastrichtungen ausgestattet ist, wobei dass in dem 3D-LIDAR-Sensor (10) eine weitere Detektionseinrichtung (14) für Abweichungen vom Normalbetrieb vorgesehen ist, mit der Abweichungen vom Normalbetrieb des 3D-LIDAR-Sensors (10) feststellbar sind, wobei die Detektionseinrichtung im Inneren eines Gehäuses des 3D-LIDAR-Sensors oder an einer Austrittsöffnung angeordnet ist, wobei die Detektionseinrichtung (14) Lichtsensoren (15) umfasst,
wobei entweder die Lichtsensoren (15) an einer Zwischenebene und/oder an der Austrittsöffnung derart angeordnet sind, dass die Lichtsensoren beim normalen Betrieb der Laserstrahlquelle (11) und des Abtastsystems nicht angestrahlt werden und dadurch erfasst wird, ob der ausgesendete Laserstrahl tatsächlich in die gewünschte Richtung gesendet wird, wobei bei einem Anstrahlen der Lichtsensoren (15) erkannt wird, dass der Laserstrahl (20) beziehungsweise das Abtastsystem dejustiert sind,
oder wobei die Lichtsensoren (15) am Rand der Austrittsöffnung oder im Bereich der Zwischenebene derart angeordnet sind, dass die Lichtsensoren beim normalen Betrieb der Laserstrahlquelle (11) und des Abtastsystems angestrahlt werden und dadurch erfasst wird, ob der ausgesendete Laserstrahl tatsächlich in die gewünschte Richtung gesendet wird, wobei bei einem Nichtanstrahlen der Lichtsensoren (15) erkannt wird, dass der Laserstrahl (20) beziehungsweise das Abtastsystem dejustiert sind,
und wobei bei einer Erkennung, dass der Laserstrahl (20) beziehungsweise das Abtastsystem dejustiert sind eine Fehlermeldung ausgegeben wird.

## Claims

1. 3D lidar sensor (10), in particular for motor vehicles, having a laser beam source (11), an optical receiver and a scanning system for deflecting a laser beam (20) created by the laser beam source (11) in two mutually perpendicular scanning directions, wherein a further detection device (14) for deviations from normal operation is provided in the 3D lidar sensor (10), wherein the detection device is arranged inside a housing of the 3D lidar sensor or at an outlet opening, wherein the detection device (14) comprises light sensors (15),
wherein either the light sensors (15) are arranged on an intermediate plane and/or at the outlet opening such that the light sensors are not irradiated during normal operation of the laser beam source (11) and the scanning system and this allows detection of whether the emitted laser beam is actually transmitted in the desired direction, wherein the laser beam (20) or the scanning system can be identified as maladjusted in the event of the light sensors (15) being irradiated,
or wherein the light sensors (15) are arranged at the edge of the outlet opening or in the region of the intermediate plane such that the light sensors are irradiated during normal operation of the laser beam source (11) and the scanning system and this allows detection of whether the emitted laser beam is actually transmitted in the desired direction, wherein the laser beam (20) or the scanning system can be identified as maladjusted in the event of the light sensors (15) not being irradiated,
and wherein an error message is output when the laser beam (20) or the scanning system is recognized as being maladjusted.

2. 3D lidar sensor (10) according to Claim 1, additionally comprising a bandpass filter and/or a coating, **characterized in that** extraneous light can be suppressed by means of the bandpass filter and/or the coating.

3. 3D lidar sensor (10) according to any of the preceding claims, **characterized in that** a scattered light sensor (16) is provided.

4. 3D lidar sensor (10) according to any of the preceding claims, **characterized in that** the 3D lidar sensor (10) is coupled to further sensors such as rain sensors, temperature sensors, ultrasonic sensors, chemical sensors or radioactivity sensors.

5. 3D lidar sensor (10) according to any of the preceding claims, **characterized in that** an expanding and/or focusing optical unit for the laser beams (20) is provided.

6. Method for operating a 3D lidar sensor (10), in particular for motor vehicles, wherein the 3D lidar sensor (10) is equipped with a laser beam source (11), an optical receiver and a scanning system for deflecting a laser beam (20) created by the laser beam source (11) in two mutually perpendicular scanning directions, wherein a further detection device (14) for deviations from normal operation, which renders deviations from normal operation of the 3D lidar sensor (10) determinable, is provided in the 3D lidar sensor (10), wherein the detection device is arranged inside a housing of the 3D lidar sensor or at an outlet opening, wherein the detection device (14) comprises light sensors (15),
wherein either the light sensors (15) are arranged on an intermediate plane and/or at the outlet opening such that the light sensors are not irradiated during normal operation of the laser beam source (11) and the scanning system and this detects whether the emitted laser beam is actually transmitted in the desired direction, wherein the laser beam (20) or the scanning system is identified as maladjusted in the event of the light sensors (15) being irradiated,
or wherein the light sensors (15) are arranged at the edge of the outlet opening or in the region of the intermediate plane such that the light sensors are irradiated during normal operation of the laser beam source (11) and the scanning system and this detects whether the emitted laser beam is actually transmitted in the desired direction, wherein the laser beam (20) or the scanning system is identified as maladjusted in the event of the light sensors (15) not being irradiated,
and wherein an error message is output when the laser beam (20) or the scanning system is recognized as being maladjusted.

## Revendications

1. Capteur LIDAR 3D (10), en particulier pour véhicules automobiles, comprenant une source de faisceau laser (11), un récepteur optique et un système de balayage pour dévier un faisceau laser (20) généré par la source de faisceau laser (11) dans deux directions de balayage mutuellement perpendiculaires, dans lequel un dispositif de détection supplémentaire (14) pour des écarts par rapport au fonctionnement normal est prévu dans le capteur LIDAR 3D (10), dans lequel le dispositif de détection est disposé à l'intérieur d'un boîtier du capteur LIDAR 3D ou au niveau d'une ouverture de sortie, dans lequel le dispositif de détection (14) comprend des capteurs de lumière (15),
dans lequel soit les capteurs de lumière (15) sont disposés au niveau d'un plan intermédiaire et/ou au niveau de l'ouverture de sortie de telle sorte que les capteurs de lumière ne sont pas irradiés en cas de fonctionnement normal de la source de faisceau laser (11) et du système de balayage, et qu'il est de ce fait possible de détecter si le faisceau laser émis est réellement envoyé dans la direction souhaitée, dans lequel on peut identifier lors d'une irradiation des capteurs de lumière (15) que le faisceau laser (20) ou le système de balayage est déréglé,
soit dans lequel les capteurs de lumière (15) sont disposés au bord de l'ouverture de sortie ou au niveau du plan intermédiaire de telle sorte que les capteurs de lumière sont irradiés en cas de fonctionnement normal de la source de faisceau laser (11) et du système de balayage, et qu'il est de ce fait possible de détecter si le faisceau laser émis est réellement envoyé dans la direction souhaitée, dans lequel on peut identifier lors d'une non-irradiation des capteurs de lumière (15) que le faisceau laser (20) ou le système de balayage est déréglé,
et dans lequel s'il est identifié que le faisceau laser (20) ou le système de balayage est déréglé, un message d'erreur est émis.

2. Capteur LIDAR 3D (10) selon la revendication 1, présentant de plus un filtre passe-bande et/ou un revêtement, **caractérisé en ce qu'**une lumière externe peut être supprimée au moyen du filtre passe-bande et/ou du revêtement.

3. Capteur LIDAR 3D (10) selon l'une quelconque des revendications précédentes, **caractérisé en ce qu'**un capteur de lumière diffusée (16) est prévu.

4. Capteur LIDAR 3D (10) selon l'une quelconque des revendications précédentes, **caractérisé en ce que** le capteur Lidar 3D (10) est couplé à des capteurs supplémentaires, tels que des capteurs de pluie, des capteurs de température, des capteurs à ultrasons, des capteurs chimiques ou des capteurs de radioactivité.

5. Capteur LIDAR 3D (10) selon l'une quelconque des revendications précédentes, **caractérisé en ce qu'**une optique d'élargissement et/ou de focalisation est prévue pour les faisceaux laser (20).

6. Procédé permettant de faire fonctionner un capteur LIDAR 3D (10), en particulier pour des véhicules automobiles, dans lequel le capteur LIDAR 3D (10) est équipé d'une source de faisceau laser (11), d'un récepteur optique et d'un système de balayage pour dévier un faisceau laser (20) généré par la source de faisceau laser (11) dans deux directions de balayage mutuellement perpendiculaires, dans lequel dans le capteur LIDAR 3D (10), un dispositif de détection supplémentaire (14) pour des écarts par rapport au fonctionnement normal est prévu qui permet de constater des écarts par rapport au fonctionnement normal du capteur LIDAR 3D (10), dans lequel le dispositif de détection est disposé à l'intérieur d'un boîtier du capteur LIDAR 3D ou au niveau d'une ouverture de sortie, dans lequel le dispositif de détection (14) comprend des capteurs de lumière (15),
dans lequel soit les capteurs de lumière (15) sont disposés au niveau d'un plan intermédiaire et/ou au niveau de l'ouverture de sortie de telle sorte que les capteurs de lumière ne sont pas irradiés en cas de fonctionnement normal de la source de faisceau laser (11) et du système de balayage, et qu'il est de ce fait possible de détecter si le faisceau laser émis est réellement envoyé dans la direction souhaitée, dans lequel on peut identifier lors d'une irradiation des capteurs de lumière (15) que le faisceau laser (20) ou le système de balayage est déréglé,
soit dans lequel les capteurs de lumière (15) sont disposés au bord de l'ouverture de sortie ou au niveau du plan intermédiaire de telle sorte que les capteurs de lumière sont irradiés en cas de fonctionnement normal de la source de faisceau laser (11) et du système de balayage, et qu'il est de ce fait possible de détecter si le faisceau laser émis est réellement envoyé dans la direction souhaitée, dans lequel on peut identifier lors d'une non-irradiation des capteurs de lumière (15) que le faisceau laser (20) ou le système de balayage est déréglé,
et dans lequel s'il est identifié que le faisceau laser (20) ou le système de balayage est déréglé, un message d'erreur est émis.
